# EUROPÄISCHE PATENTSCHRIFT

(11) **EP 2 488 289 B1**
(45) Veröffentlichungstag und Bekanntmachung des Hinweises auf die Patenterteilung: **30.03.2016**
(21) Anmeldenummer: 09784020.1
(22) Anmeldetag: 15.10.2009
(51) Int. Cl.: B01F 7/02, B01F 7/04, B01F 13/06, B01F 15/00, B01F 15/06, B01F 3/20, B01F 3/22, A23G 1/10, A23G 1/00

(54) **VERFAHREN UND VERWENDUNG ZUR VERFEINERUNG**
METHOD AND USE FOR REFINING
PROCÉDÉ ET UTILISATION POUR L'AFFINAGE

(43) Veröffentlichungstag der Anmeldung: 22.08.2012
(73) Patentinhaber: Bühler AG, 9240 Uzwil (CH)
(72) Erfinder: BRAUN, Peter, 8280 Kreuzlingen (CH); KELLER, Marco, CH-8514 Bissegg (CH)
(74) Vertreter: Hepp Wenger Ryffel AG
(86) Internationale Anmeldenummer: PCT/EP2009/063449
(87) Internationale Veröffentlichungsnummer: WO 2011/044941

(56) Entgegenhaltungen:
- EP-A1- 0 879 562
- WO-A1-2007/066362
- DE-A1- 3 914 694
- DE-A1- 4 218 011
- DE-A1-102008 041 162
- DE-B- 1 048 135
- GB-A- 741 412
- US-A- 1 683 500
- US-A- 5 393 138

## Beschreibung

Die Erfindung betrifft die Verwendung eines Zentrifugalmischers zur Verfeinerung einer Fettmassesowie ein Verfahren zur Verfeinerung einer Fettmasse.

Die Bearbeitung von festen und/oder flüssigen Fettmassen, insbesondere in der Nahrungsmittelproduktion, ist ein Prozess mit mehreren Bearbeitungsschritten. Meist werden in einem ersten Schritt die Komponenten der Fettmasse zusammengemischt. Eine Komponente im Sinne dieser Anmeldung ist als Substanz oder Ingredienz zu verstehen, die in der Fettmasse entweder als Feststoff suspendiert oder auch in gelöster Form vorkommt oder dieser zugegeben wird. Beispielsweise kann eine Schokoladenmasse aus den Komponenten Kakaobutter, Zucker, Milchpulver sowie Kakaopulver bestehen.

Bei der herkömmlich bekannten Produktion von Schokoladenmasse werden die Komponenten zunächst in einem Rührkessel vermischt. In einem weiteren Schritt wird die Fettmasse in der Regel durch ein oder mehrere Walzwerke gewalzt, wobei die in der Masse suspendierten Feststoffe weiter zerkleinert werden. Beispielsweise kann die Masse vor dem Walzen in einem 2-, 3- oder 5-Walzwerk zunächst in einem 2-Walzwerk vorgewalzt werden. Dabei wird die Fettmasse weitgehend homogenisiert. Nach dem Walzen kann die Fettmasse weiteren Schritten unterzogen werden, wie beispielsweise Conchieren, wobei je nach Rezeptur weitere Komponenten der Masse beigegeben werden können.

Bei der Produktion einfacherer Produkte, wie Füllungen oder Compounds, werden die Komponenten in einer Vorrichtung zur Nasszerkleinerung vorgängig vermischt und in der Mühle zerkleinert. Bei der Nasszerkleinerung auch Verfahren bekannt, in denen die Mischung und Zerkleinerung im gleichen Prozessraum erfolgen.

Die Nasszerkleinerung kann in einer Rührwerkskugelmühle oder in einer Trommelmühle mit Schlagleisten oder Schlagmessern geschehen.

Durch das Conchieren wird die Schokoladenmasse in eine fliessfähige Suspension von Zucker-, Kakao- und gegebenenfalls Milchpulverteilchen in der Kakaobutter umgewandelt, wobei die Teilchen von der Kakaobutter umhüllt werden. In der Conche wird durch mechanischen Energieeintrag vorwiegend über Scherkräfte eine Desagglomerierung bewirkt. Ausserdem wird durch den mechanischen Energieeintrag in die Schokoladenmasse und die damit bewirkte ständige Neubildung von Oberflächen in den nur teilweise gefüllten Conche sowie durch den Temperaturanstieg das Entweichen ungewollter, meist flüchtiger Aromastoffe begünstigt.

Je nach Verwendung kann die Fettmasse zusätzlich verfeinert werden. Beispielsweise beschreibt die US 3 985 607 den Einsatz eines Dünnschichtverdampfers. Bei diesem Verfahren erfolgt der Energieeintrag über einen Rotor, der die Masse von der Wand eines Stators abschabt und diese gleich wieder an die Wand schleudert. Neben dieser mechanischen Behandlung der Masse erfolgt zeitgleich eine Entgasung. Nachteilig an diesem Verfahren ist die relativ diskontinuierliche und ineffiziente Energieübertragung vom Rotor auf die Masse.

Die EP 1 365 658 beschreibt ein Veredlungsverfahren für Kakao- oder Schokolademassen. Bei diesem Verfahren wird die Masse mittels Gasdruck durch einen statischen Mischer gepresst, wobei ungewollte flüchtige Aromastoffe aus der Masse entweichen und mit dem Gas, welches nach dem statischen Mischer wieder von der Masse abgetrennt wird, mitgerissen werden. Danach kann die Masse in einer weiteren Stufe in einer Dispergiervorrichtung, beispielsweise eine Stift- oder Rührwerkskugelmühle, wiederum unter Zuleitung eines Gases weiter veredelt werden. Nachteilig an diesem Verfahren ist die mehrstufige Veredelung der Masse, die eine aufwändige Apparatur benötigt.

Eine Aufgabe der Erfindung ist es demnach, ein Verfahren bereit zu stellen, welches die Nachteile des Bekannten verhindert und mit welchem eine effiziente und kontinuierliche Verfeinerung einer Fettmasse möglich ist. Diese Aufgabe wird mit einem Verfahren mit den Merkmalen des Anspruchs 1 gelöst.

Es wurde festgestellt, dass eine Fettmasse besonders effizient verfeinert werden kann, wenn diese in mindestens einem Zentrifugalmischer mit einer zur Umgebungsatmosphäre unterschiedlichen Wirkatmosphäre beaufschlagt wird.

Als Fettmasse im Sinne der Anmeldung werden feste und/oder flüssige Produkte, die im Zentrifugalmischer entstehen, verstanden, die zu mehr als 15 Gew.-% aus Fett und/oder Öl bestehen. Bevorzugt beträgt der Fettanteil der Masse mehr als 25 Gew.-%, besonders bevorzugt mehr als 30 Gew.-%. Bevorzugt handelt es sich dabei um pastöse oder pulverförmige Massen.

Bevorzugt sind noch weitere Komponenten in der Fettmasse vorhanden. In der Erfindung wird eine Schokoladen- oder Kakaomasse verfeinert. Beispielsweise können bei einer Schokoladenmasse als weitere Komponenten Kakaomasse, Zucker, Milchpulver sowie weitere Ingredienzien vorhanden sein.

Zentrifugalmischer sind an sich bekannt. Beispielsweise beschreibt die WO 2007/066362 einen solchen Mischer. Dabei wird die zu bearbeitende Substanz in eine bevorzugt im Wesentlichen horizontale Trommel geführt. In der Trommel befindet sich eine rotierende Welle, die mindestens teilweise mit Stiften versehen ist. Zur Erzeugung eines Vorschubs können die Stifte spiralförmig angeordnet sein. Durch die hohe Drehzahl der Stifte wird das eingetragene Material durch die Wirkung der Zentrifugalkraft gegen die Innenwände der Trommel geschleudert. Die eingebrachte Substanz wird dabei ständig durch die Stifte durchmischt.

Die Dichte der Stifte kann entlang der Welle variieren. Bei spiralförmig angeordneten Stiften kann sich die Steigung der Spirale ändern, im Extremfall soweit, dass eine Rückförderung ermöglicht wird. Die Stifte können gleichartig sein, beispielsweise eine runde Querschnittsfläche von demselben Durchmesser aufweisen. Alternativ können unterschiedliche Arten von Stiften an der Welle angeordnet sein, beispielsweise mit unterschiedlichen Querschnittsflächen (polygonal, elliptisch, rund) oder mit unterschiedlichen Durchmessern. Bevorzugt sind die Stifte zylinderförmig, sie können aber auch keulenförmig oder schaufelartig sein.

Erfindungsgemäss wird ein offener Zentrifugalmischer verwendet. Dieser bietet einen freien Austrag der Massen, sodass es zu keinem Rückstau der Masse kommt.

Dazu ist das Ende der Trommel offen und nicht oder nur geringfügig verjüngt. Der Austrieb der Masse kann auch durch eine Austrageinrichtung, beispielsweise einen Schneckenförderer, geschehen. Bei einer zweiseitig gelagerten Mischerwelle kann der freie Austrag beispielsweise durch eine konzentrische Öffnung gewährleistet sein.
Weil die Fettmasse nicht zurück gestaut wird, bildet sich durch die Zentrifugalkraft an der inneren Wand des Zentrifugalmischers eine dünne Schicht der Masse. Durch die Rotation der Stifte erfolgt ein konstanter Energieeintrag in die Masse. Dieser Energieeintrag erfolgt durch die hohe Drehzahl der Welle und die dünne Schichtdicke relativ gleichmässig über das ganze Volumen der bearbeiteten Masse.

Unter Umgebungsatmosphäre wird die Atmosphäre in unmittelbarer Nachbarschaft des Zentrifugalmischers verstanden. Diese definiert sich durch Parameter wie Druck, Temperatur und Zusammensetzung des Umgebungsgases. Typischerweise wird die Umgebungsatmosphäre Luft unter Normaldruck und bei Zimmertemperatur sein, also hauptsächlich aus Stickstoff, Sauerstoff und Spurengasen bestehen. Unter den Begriff Zusammensetzung, wie er hier verwendet wird, fällt auch die in der Atmosphäre vorhandene Feuchtigkeit.

Die Wirkatmosphäre weist einen zur Umgebungsatmosphäre unterschiedlichen Druck und/oder eine unterschiedliche Zusammensetzung auf. Der Druckunterschied wird bevorzugt durch Einleiten eines Gases in den Zentrifugalmischer und/oder durch Anlegen eines Unterdrucks an den Zentrifugalmischer erzeugt. Die Zusammensetzung der Wirkatmosphäre wird bevorzugterweise durch Einleiten eines Wirkmediums, insbesondere von einem Gas, einer Gasmischung, einem Dampf, einem Aerosol und/oder einer Flüssigkeit verändert.

Die Temperatur kann durch eine Temperierung des zugesetzten Wirkmediums gewählt werden. Bevorzugt wird jedoch der Mantel der Trommel temperiert, beispielsweise mittels eines Doppelwandaufbaus.

Durch das Beaufschlagen der Fettmasse mit einer zur Umgebungsatmosphäre unterschiedlichen Wirkatmosphäre kann bevorzugt ein Gas in die Fettmasse eingebracht werden. Bevorzugt wird dazu ein inertes Trägergas eingeleitet.

Bevorzugterweise können durch das Beaufschlagen der Fettmasse mit einer zur Umgebungsatmosphäre unterschiedlichen Wirkatmosphäre der Fettmasse Inhaltsstoffe wie beispielsweise Aromen, flüchtige Stoffe, Essigsäure aber auch Gase oder Feuchtigkeit entzogen werden. Beispielsweise werden in einer bevorzugten Ausführungsform durch Anlegen eines Unterdrucks an den Zentrifugalmischer der Fettmasse vorher eingebrachte und/oder vorhandene flüchtige Aromastoffe entzogen. Dies kann die Qualität einer zum Verzehr bestimmten Fettmasse erheblich steigern, da störende Aromen selektiv entfernt werden können. Eine andere bevorzugte Ausführungsform ermöglicht es, der Fettmasse Feuchtigkeit durch Einleiten eines trockenen Gases oder Gasgemisches zu entziehen.

Flüchtige Bestandteile können sich auch in Flüssigkeit oder Dampf lösen und damit abtransportiert werden.

Die im Zentrifugalmischer bearbeitete Fettmasse wird durch die Zentrifugalkraft an die Innenwand des Mischers geschleudert. Dadurch entsteht eine dünne Materialschicht an der Wand, wobei sich die Diffusionsstrecke der flüchtigen Stoffe reduziert. Dies wirkt sich besonders vorteilhaft auf Gasaustausch, Gasentzug sowie Einbringen eines Gases aus. Der Entzug von Feuchtigkeit aus der Fettmasse wird ebenfalls erheblich positiv beeinflusst.

Es hat sich gezeigt, dass durch das erfindungsgemässe Verfahren zusätzlich eine besonders vorteilhafte Dispergierung der in der Fettmasse vorhandenen Flüssigkeiten und/oder Gase erfolgt. Dadurch wird die Masse homogenisiert. Durch die Dispergierung werden die in der Fettmasse suspendierten Teilchen, wie beispielsweise Zuckerpartikel, desagglomeriert, oder in der Masse befindliche Gas- und/oder Flüssigkeitströpfchen feinst verteilt, wodurch die Masse eine glatte Oberfläche erhält, die insbesondere die Weiterverarbeitung oder Herrichtung für zum Verzehr bestimmte Fettmassen, z.B. einer Schokoladenmasse, besonders vorteilhaft ist.

Bevorzugt kann durch das erfindungsgemässe Verfahren die Dichte einer Fettmasse auf einen vorbestimmten Wert eingestellt werden.

Dies erfolgt bevorzugt durch die so genannte Microaeration. Durch Einbringen von Gasen im geschlossenen Zentrifugalmischer in eine Fettmasse kann deren Dichte verringert werden ohne die Sensorik zu beeinflussen. Dies ist besonders bei der Herstellung von kalorienreduzierten Produkten, wie Diätschokolade und dergleichen erwünscht.

Durch Entzug von Gasen kann entsprechend die Dichte einer Fettmasse erhöht werden.

In einer bevorzugten Ausführungsform werden mehrere, insbesondere zwei oder drei Zentrifugalmischer hintereinander angeordnet. Dadurch lässt sich eine Fettmasse kontinuierlich über mehrere Stufen verfeinern. Beispielsweise kann die Masse durch verschiedene Wellendrehgeschwindigkeiten und/oder verschiedenen Durchsätzen und/oder verschiedenen Temperaturen in den Zentrifugalmischern mehrstufig bearbeitet werden.

Es ist jedoch auch möglich, in einem ersten Zentrifugalmischer ein bestimmtes Trägergas in die Masse einzubringen und dieses Gas dann mitsamt darin gelöster, ungewünschter Aromastoffen in einem weiteren Mischer wieder zu entfernen. Für die Bearbeitung grösserer Mengen einer Fettmasse lassen sich beispielsweise auch mehrere Zentrifugalmischer parallel, d.h. nebeneinander anordnen.

Es hat sich gezeigt, dass beim erfindungsgemässen Verfahren bei der Verfeinerung von kakaohaltigen Produkten, wie Schokoladen, und besonders bei Kakaomassen und einfacher Schokolademassen, wie Compounds oder Füllungen, auf das weitere Veredeln der Masse verzichtet werden kann oder die Veredelungszeit erheblich reduziert werden kann, ohne dass die Qualität des Produktes beeinträchtigt wird.

Eine weitere Lösung der erfindungsgemässen Aufgabe ist, durch Verwendung eines Zentrifugalmischers eine effiziente und kontinuierliche Bearbeitung einer Fettmasse zu ermöglichen. Diese Aufgabe wird durch die Verwendung eines Zentrifugalmischers mit den Merkmalen des Anspruchs 9 gelöst.

Durch Verwendung eines Zentrifugalmischers bei gleichzeitiger Beaufschlagung mit einer zur Umgebungsatmosphäre unterschiedlichen Wirkatmosphäre lässt sich eine Fettmasse effizient und kontinuierlich verfeinern.

Die Wirkatmosphäre, die einen zur Umgebungsatmosphäre unterschiedlichen Druck und/oder eine unterschiedliche Zusammensetzung aufweist, lässt sich beispielsweise durch Einleiten eines Wirkmediums, wie eines Gases, Gasgemisches, Dampfes, Aerosols oder einer Flüssigkeit in den Zentrifugalmischer, oder aber durch das Temperieren des Mantels und/oder durch Anlegen eines Unterdrucks an den Zentrifugalmischer erreichen.

Bevorzugt werden der Fettmasse dabei Inhaltstoffe zugesetzt, ausgetauscht oder entzogen, indem beispielsweise ein Gas in die Fettmasse eingebracht oder ausgetauscht wird. Besonders bevorzugt können der Fettmasse auch Gase und/oder Feuchtigkeit entzogen werden.

Ganz besonders bevorzugt werden im Zentrifugalmischer Kakao- oder Schokoladenmassen sowie Füllungs- und Brotaufstrichmassen durch Beaufschlagen mit einer zur Umgebungsatmosphäre unterschiedlichen Wirkatmosphäre verfeinert.

Beispielsweise kann eine Kakaomasse durch Wasserzugabe verfeinert werden. Dazu wird der Mantel des Zentrifugalmischers auf eine Temperatur im Bereich zwischen 20°C-200°C, besonders auf eine Temperatur im Bereich zwischen 80°C und 180 °C, weiter bevorzugt auf eine Temperatur im Bereich zwischen 90°C und 150°C gebracht.

Es kann auch in der Fettmasse befindliche Kakaobutter durch eine Dampfinjektion desodoriert werden.

Wird eine Fettmasse durch einen Zentrifugalmischer geleitet, in dem eine höhere Temperatur als in der Umgebungsatmosphäre vorliegt, so kann dies zur Entfeuchtung der Masse führen.

In einer weiteren bevorzugten Ausführungsform der Erfindung in der Fettmasse vorhandene Partikel und/oder Gase im Zentrifugalmischer zusätzlich dispergiert.

Eine Fettmasse kann in einer Produktionsstrecke bearbeitet werden, welche mindestens einen Zentrifugalmischer mit einer Vorrichtung zur Einstellung einer zur Umgebungsatmosphäre unterschiedlichen Wirkatmosphäre im Zentrifugalmischer umfasst.

Bevorzugt wird ein Wirkmedium, wie ein Gas, Gasgemisch, Dampf, Aerosol und/oder eine Flüssigkeit über den Materialeinlass oder eine Zuführung in der Nähe des Materialeinlasses zugeführt. Prinzipiell kann das Wirkmedium aber über Zuführungen, die beliebig über die gesamte Trommel verteilt sind, zugeführt werden, da die gleichmässige Verteilung eine Gases und/oder einer Flüssigkeit von sich aus erfolgt.

Wird die Fettmasse über ein Austragungsorgan abgeführt, so kann ein Absperrorgan, insbesondere eine Absperrschnecke, für das Wirkmedium vorgesehen sein. Mit der Absperrschnecke kann im Zentrifugalmischer ein Druck eingestellt werden.

Zusätzlich kann der Zentrifugalmischer mit einer Vorrichtung zum Kontrollieren und/oder Regeln der Wirkatmosphäre ausgestattet sein.

Durch den Zentrifugalmischer mit der zur Umgebungsatmosphäre unterschiedlichen Wirkatmosphäre können einer Fettmasse kontinuierlich Inhaltsstoffe in Form von Gas und/oder Feuchtigkeit entzogen werden. Bevorzugt kann auch ein Gas, Gasgemisch und/oder eine Flüssigkeit in die Fettmasse eingebracht werden.

In einer besonders bevorzugten Ausführungsform der Erfindung umfasst die Produktionsstrecke eine Vorrichtung zum Conchieren. Dabei kann es sich um eine Batch-Conche handeln. Besonders bevorzugt umfasst die erfindungsgemässe Produktionsstrecke eine kontinuierliche Conche.

Eine andere bevorzugte Ausführungsform der erfindungsgemässen Produktionsstrecke umfasst zudem ein Walzwerk. Dabei kann es sich um ein Walzwerk mit einer beliebigen Anzahl an Walzen handeln. Besonders bevorzugt umfasst die erfindungsgemässe Produktionsstrecke jedoch ein 2-, 3- oder 5-Walzwerk.

Eine weitere Ausführungsform kann vorsehen, dass die Produktionsstrecke in Bearbeitungsrichtung zwei nacheinander angeordnete Zentrifugalmischer umfasst. Im ersten Mischer kann ein Gas, zum Beispiel mittels einer Absperrschnecke, angestaut werden und so bei einem Überdruck ein Gas in die Fettmasse eingebracht werden. Im zweiten Mischer kann ein Unterdruck vorliegen, sodass mit dem Gas gezielt Inhaltsstoffe aus der Fettmasse entfernt werden.

Eine weitere Ausführungsform der Erfindung sieht vor, den Zentrifugalmischer derart in der Produktionsstrecke anzuordnen, dass der Zentrifugalmischer mindestens zweimal von der Fettmasse oder Teilen davon durchlaufen wird. Die Masse kann dazu in mindestens einem Kreislauf durch die Produktionsstrecke oder einen Teil davon geführt werden.

Die Komponenten der Fettmasse können beispielsweise in einem Zentrifugalmischer zunächst gerührt und/oder zerkleinert werden, anschliessend entweder gewalzt, conchiert und/oder in einer Vorrichtung zur Nasszerkleinerung behandelt werden und anschliessend alle oder einen Teil der Produktionsschritte wiederholt werden. Bei einem erneuten Durchlauf des Zentrifugalmischers können die Komponenten erneut gerührt und/oder zerkleinert werden und/oder veredelt werden. Dazu können sie in dem Zentrifugalmischer mit einer zur der Umgebungsatmosphäre unterschiedlichen Wirkatmosphäre beaufschlagt werden. Diese weist bevorzugt eine zur Umgebungsatmosphäre unterschiedlichen Druck und/oder unterschiedliche Zusammensetzung auf, so dass der Fettmasse Inhaltsstoffe zugesetzt und/oder entzogen werden.

Der Zentrifugalmischer umfasst dabei eine bevorzugt im Wesentlichen horizontal angeordneten Trommel und eine, in der Trommel koaxial angeordnete, Welle, wobei der Zentrifugalmischer einen freien Austrag erlaubt und die Welle zweiseitig gelagert ist.

Die Trommel kann die Trommel so ausgerichtet sein, dass die Auslassöffnung unterhalb der Einlassöffnung angeordnet ist, sodass der Austrieb der Masse durch die Schwerkraft begünstig wird.

Die Welle ist, wie weiter oben beschrieben, bevorzugt mindestens auf einem Abschnitt mit Stiften versehen, die bevorzugt entlang der Welle spiralförmig angeordnet sind.

Eine Halterung für das erste Lager der Welle befindet sich in der Regel an der Seite der Trommel, an welcher auch der Einlass angeordnet ist. Die Lagerung für das zweite Lager ist am anderen Ende der Welle vorgesehen. Die Halterung für das zweite Lager kann mit der Trommel verbunden sein, beispielsweise über Haltestege. Alternativ kann die Halterung auch an einer Bodenplatte befestigt sein, sodass die beiden Lager entkoppelt sind.

Ein freier Austrag der Masse kann durch eine konzentrische oder quasikonzentrische Austrittsöffnung gewährleistet werden. Die Öffnung weist bei einer Trommel mit offenem Ende in Richtung der Wellenachse.
Der Zentrifugalmischer weist eine im Wesentlichen horizontal angeordnete Trommel und eine Welle auf, wobei bevorzugt die Innenwandung der Trommel strukturiert ist, insbesondere derart, dass dadurch die Haftung einer zu fördernden Masse an der Innenwandung beeinflusst wird, insbesondere derart, dass dadurch die Haftung einer zu fördernden Masse an der Innenwandung begünstigt wird, insbesondere im Vergleich zu einer glatten Wand erhöht wird.

Insbesondere für die gleichmässige gezielte Bearbeitung von Fettmassen ist es wichtig, dass die Masse nicht zu kurz und nicht zu lange im Mischer verbleibt, sondern den Stiften nur eine bestimmte definierte Zeit ausgesetzt ist. Dazu soll die Masse gleichmässig durch den Mischer getrieben werden. Einerseits ist zu vermeiden, dass die Masse oder Teile davon an der Wand haften bleiben, andererseits, dass die Masse oder Teile davon unbearbeitet durch die Trommel durchrutschen.

Die Wandhaftung kann durch Strukturen an der Innenwand der Trommel beeinflusst werden. Dazu kann die Innenwandung aufgeraut und/oder gewellt und/oder gezahnt und/oder mit Stiften versehen sein.

Vorteilhafterweise ist der Zentrifugalmischer, zum Beispiel mittels eines Doppelwandaufbaus, temperierbar. Er kann also gekühlt oder erwärmt werden, so dass die Wand der Trommel und/oder die Masse in dem Zentrifugalmischer auf einer vorwählbaren Temperatur gehalten werden kann.

Weitere Vorteile und Einzelmerkmale der Erfindung ergeben sich aus der nachfolgenden Beschreibung von Ausführungsbeispielen und aus der Zeichnung. Es zeigt:
- Fig. 1:: Schematische Darstellung einer bevorzugten Ausführungsform der Produktionsvorrichtung
- Fig. 2:: Schematische Darstellung einer weiteren bevorzugten Ausführungsform der Produktionsvorrichtung
- Fig. 3:: Schematische Darstellung eines Zentrifugalmischers mit zweiseitig gelagerter Welle
- Fig. 4:: Schematische Darstellung einer weiteren Ausführungsform eines Zentrifugalmischers

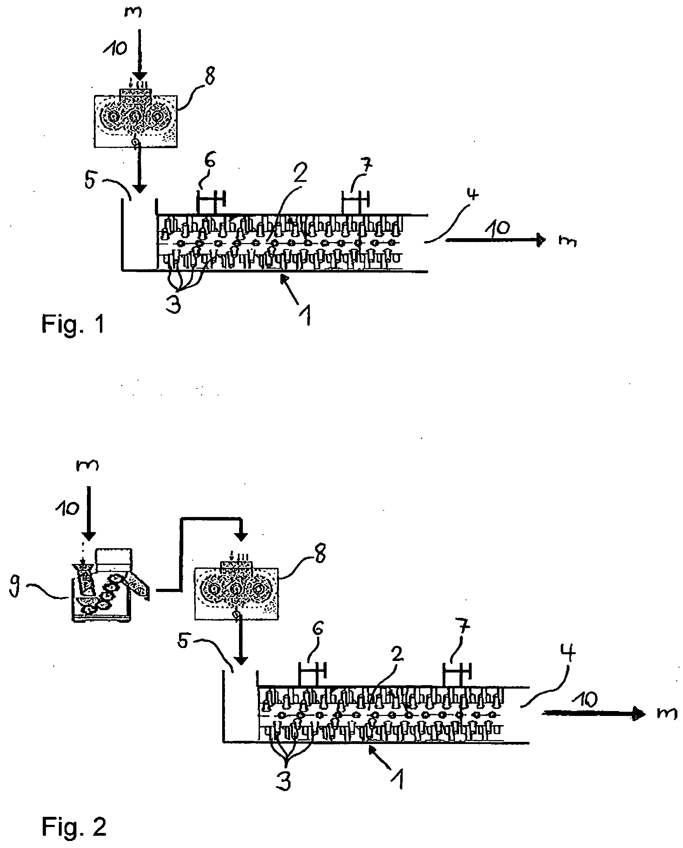

In Figur 1 ist schematisch eine bevorzugte Ausführungsform einer Produktionsvorrichtung dargestellt. Ein Zentrifugalmischer 1 dient der Verfeinerung einer Fettmasse m. Besonders bevorzugt ist in Produktionsrichtung 10 vor dem Zentrifugalmischer 1 eine Conche angeordnet. Dabei kann es sich wie in der Figur gezeigt bevorzugt um eine kontinuierliche Conche handeln oder aber auch um eine Batch-Conche. Die Fettmasse m wird nach dem Conchieren in den Zentrifugalmischer 1 überführt. Der Zentrifugalmischer 1 verfügt über einen Einlass 5 und einen Auslass 4. Der Durchmesser der Trommel des Zentrifugalmischers 1 verjüngt sich zum Auslass 4 hin nicht oder nur geringfügig, um ein Aufstauen der bearbeiteten Masse zu verhindern. Im Zentrifugalmischer 1 ist mittig eine drehbar gelagerte Welle 2 angebracht. Die Welle 2 verfügt über eine Vielzahl von Stiften 3. Durch die hohe Drehzahl der Welle 2 wird die bearbeitete Masse immer wieder an die innere Wand der Trommel des Zentrifugalmischers 1 geschleudert, wo sie kontinuierlich von den Stiften 3 bearbeitet wird. Die Stifte 3 sind bevorzugt spiralförmig angeordnet, um für einen Vorschub der Masse m zu sorgen. Zentrifugalmischer 1 verfügt bevorzugt zudem über mindestens einen Gaseinlass 6 und/oder mindestens einen Gasauslass 7. Durch den mindestens einen Gaseinlass 6 kann die Masse im innern des Zentrifugalmischers 1 mit einer zur Umgebungsatmosphäre unterschiedlichen Wirkatmosphäre beaufschlagt werden. An den mindestens einen Gasauslass 7 kann beispielsweise eine Pumpe angebracht werden, um im Innern des Zentrifugalmischers 1 einen Unterdruck zu erzeugen. In Produktionsrichtung 10 können bevorzugt noch weitere Vorrichtungen angeordnet sein, um eine weitere Verfeinerung der Fettmasse zu erzielen. Bevorzugt wird nach dem Zentrifugalmischer 1 mindestens noch ein weiterer Zentrifugalmischer angeordnet.

In Figur 2 ist eine besonders bevorzugte Ausführungsform einer erfindungsgemässen Produktionsstrecke schematisch dargestellt. Dabei wir die Fettmasse m zunächst durch ein Walzwerk 9 geleitet. Durch das Walzen wird die Grösse von in der Fettmasse suspendierter Partikel reduziert. Bevorzugt handelt es sich bei Walze 9 um ein 2-, 3-, oder 5-Walzwerk. In Produktionsrichtung 10 hinter dem Walzwerk ist eine Conche 8 angeordnet. Dabei handelt es sich bevorzugt um eine kontinuierliche Conche. In einigen Fällen kann Conche 8 auch eine Batch-Conche sein. Nach dem Conchieren wird die Fettmasse m durch den Einlass 5 in den Zentrifugalmischer 1 überführt. Der Zentrifugalmischer 1 verfügt über einen Einlass 5 und einen Auslass 4. Der Durchmesser der Trommel des Zentrifugalmischers 1 verjüngt sich zum Auslass 4 hin nicht oder nur geringfügig, um ein Aufstauen der bearbeiteten Masse zu verhindern. Im Zentrifugalmischer 1 ist mittig eine drehbar gelagerte Welle 2 angebracht. Die Welle 2 verfügt über eine Vielzahl von Stiften 3. Durch die hohe Drehzahl der Welle 2 wird die bearbeitete Masse immer wieder an die innere Wand der Trommel des Zentrifugalmischers 1 geschleudert, wo sie kontinuierlich von den Stiften 3 bearbeitet wird. Die Stifte 3 sind bevorzugt spiralförmig angeordnet, um für einen Vorschub der Masse m zu sorgen. Zentrifugalmischer 1 verfügt bevorzugt zudem über mindestens einen Gaseinlass 6 und/oder mindestens einen Gasauslass 7. Durch den mindestens einen Gaseinlass 6 kann die Masse im innern des Zentrifugalmischers 1 mit einer zur Umgebungsatmosphäre unterschiedlichen Wirkatmosphäre beaufschlagt werden. An den mindestens einen Gasauslass 7 kann beispielsweise eine Pumpe angebracht werden, um im Innern des Zentrifugalmischers 1 einen Unterdruck zu erzeugen.

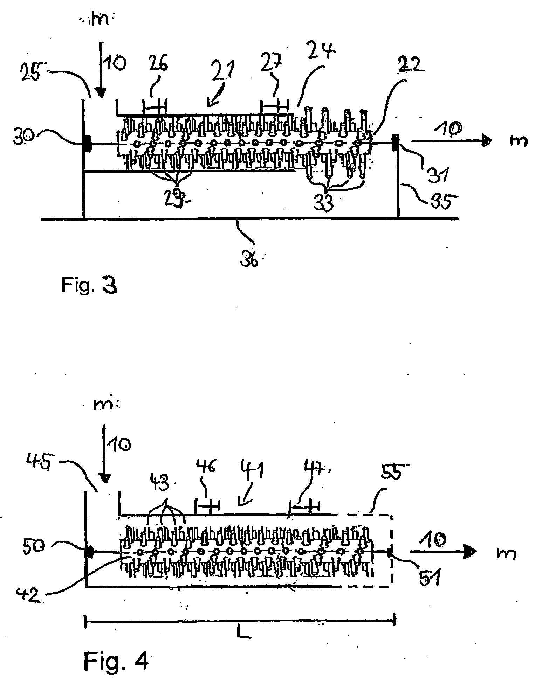

Figur 3 ist eine schematische Darstellung einer ersten Ausführungsform eines Zentrifugalmischers 21 mit zweiseitig gelagerter Welle 22. Ein erstes Lager 30 befindet sich in der Nähe des Einlasses 25, ein zweites Lager 31 in der Nähe des Auslasses 24. Insbesondere bei grösseren Trommelvolumina und/oder Trommellängen ist die Welle 22 bei zweiseitiger Lagerung stabiler gelagert.

Die Lagerhalterung für das zweite Lager 31 ist nicht direkt mit der Trommel verbunden, sondern bevorzugt an der Bodenplatte 36 befestigt. Dadurch sind die beiden Drehlager 30, 31 voneinander entkoppelt.

Der freie Austrag wird durch einen konzentrischen Auslass 24 gewährleistet.

Die Welle 22 kann über die Länge L der Trommel hinausgeführt sein. Bevorzugt sind im hinausragenden Bereich der Welle 22 noch Stifte 33 angeordnet, die den konzentrischen Austrag begünstigen. Die Stifte 33 können in diesem Bereich länger sein als Stifte 23 auf der übrigen Welle.

Der Zentrifugalmischer verfügt über einen Gaseinlass 26 sowie einen Gasauslass 27. Dadurch kann die Masse mit einer zur Umgebungsatmosphäre unterschiedlichen Wirkatmosphäre beaufschlagt werden.

Figur 4 ist eine schematische Darstellung einer zweiten Ausführungsform eines Zentrifugalmischers 41 mit zweiseitig gelagerter Welle 42. Ein erstes Lager 50 befindet sich in der Nähe des Einlasses 45, ein zweites Lager 51 in der Nähe des Auslasses.

Der Zentrifugalmischer verfügt über einen Einlass 45, durch den die Masse m in die Trommel eingeführt werden kann. Die Welle 42 ist mit Stiften 43 versehen, welche vorzugsweise spiralförmig auf angebracht sind.

In diesem Beispiel ist die Lagerhalterung für das zweite Lager 51 direkt mit der Trommel verbunden. Die Befestigung erfolgt über Verbindungsstege 55, zwischen denen genügend grosse Austrittsfenster frei bleiben, sodass eine quasi konzentrische Auslassöffnung vorliegt und ein rückstaufreier Austritt der Masse möglich ist.

Der Zentrifugalmischer verfügt über einen Gaseinlass 46 sowie einen Gasauslass 47. Dadurch kann die Masse mit einer zur Umgebungsatmosphäre unterschiedlichen Wirkatmosphäre beaufschlagt werden.

Die Innenwandung der Trommel kann für eine verbesserte Wandhaftung strukturiert sein.

## Patentansprüche

1. Verfahren zur Verfeinerung einer Fettmasse (m), nämlich einer Schokoladen- oder Kakaomasse, wobei die Fettmasse (m) in mindestens einem offenen Zentrifugalmischer (1; 21; 41), der einen freien Austrag der Masse bietet, sodass es zu keinem Rückstau der Masse kommt, mit einer im Wesentlichen horizontal angeordneten Trommel, deren Ende offen und nicht oder nur geringfügig verjüngt ist, und einer Welle, die zumindest teilweise mit Stiften versehen ist, mit einer zur Umgebungsatmosphäre unterschiedlichen Wirkatmosphäre beaufschlagt wird, wobei die Wirkatmosphäre einen zur Umgebungsatmosphäre unterschiedlichen Druck und/oder eine unterschiedliche Zusammensetzung aufweist.

2. Verfahren nach Anspruch 1, **dadurch gekennzeichnet, dass** die Wirkatmosphäre eine zur Umgebungsatmosphäre unterschiedliche Temperatur aufweist.

3. Verfahren nach Anspruch 1 oder 2, **dadurch gekennzeichnet, dass** ein Gas in die Fettmasse (m) eingebracht oder ausgetauscht wird.

4. Verfahren nach Anspruch 1 oder 2, **dadurch gekennzeichnet, dass** der Fettmasse (m) Inhaltsstoffe, insbesondere in Form von Gasen oder Feuchtigkeit entzogen werden.

5. Verfahren nach einem der vorhergehenden Ansprüche, **dadurch gekennzeichnet, dass** ein Druckunterschied der Wirkatmosphäre zur Umgebungsatmosphäre durch Einleiten eines Gases oder einer Gasmischung in den Zentrifugalmischer (1; 21; 41) und/oder durch Anlegen eines Unterdrucks an den Zentrifugalmischer (1; 21; 41) erzeugt wird.

6. Verfahren nach einem der Ansprüche 1 bis 5, **dadurch gekennzeichnet, dass** in der Fettmasse (m) vorhandene Partikel und/oder Gase im Zentrifugalmischer (1; 21; 41) zusätzlich dispergiert werden.

7. Verfahren nach einem der vorhergehenden Ansprüche, **dadurch gekennzeichnet, dass** die Dichte der Fettmasse (m) auf einen vorbestimmte Wert reduziert wird.

8. Verfahren nach einem der vorhergehenden Ansprüche, **dadurch gekennzeichnet, dass** einer Kakaomasse Flüssigkeit, insbesondere Wasser zugesetzt wird.

9. Verwendung eines offenen Zentrifugalmischers (1; 21; 41), der einen freien Austrag der Masse bietet, sodass es zu keinem Rückstau der Masse kommt, mit einer im Wesentlichen horizontal angeordneten Trommel, deren Ende offen und nicht oder nur geringfügig verjüngt ist, und einer Welle, die zumindest teilweise mit Stiften versehen ist, zur Verfeinerung einer Fettmasse (m), nämlich einer Schokoladen- oder Kakaomasse, wobei die Fettmasse (m) in einem Verfahren gemäss einem der Ansprüche 1-8 im Zentrifugalmischer (1; 21; 41) mit einer zur Umgebungsatmosphäre unterschiedlichen Wirkatmosphäre beaufschlagt wird, wobei die Wirkatmosphäre einen zur Umgebungsatmosphäre unterschiedlichen Druck und/oder eine unterschiedliche Zusammensetzung aufweist.

10. Verwendung eines Zentrifugalmischers (1; 21; 41) nach Anspruch 9, wobei die Wirkatmosphäre eine zur Umgebungsatmosphäre unterschiedliche Temperatur aufweist, und/oder wobei ein Gas in die Fettmasse (m) eingebracht und/oder ausgetauscht wird, und/oder wobei der Fettmasse (m) Inhaltsstoffe, in Form von Gas und/oder Feuchtigkeit entzogen werden.

11. Verwendung eines Zentrifugalmischers (1; 21; 41) nach einem der Ansprüche 9 oder 10, wobei in der Fettmasse (m) vorhandene Partikel, Flüssigkeiten und/oder Gase im Zentrifugalmischer (1; 21; 41) fein dispergiert werden.

12. Verwendung eines Zentrifugalmischers (1; 21; 41) nach einem der Ansprüche 9 bis 11, wobei der Druckunterschied der Wirkatmosphäre zur Umgebungsatmosphäre durch Einleiten eines Gases oder einer Gasmischung und/oder durch Anlegen eines Unterdrucks erzeugt wird.

13. Verfahren entsprechend Anspruch 1, mit einer Produktionsstrecke zur Verfeinerung der Fettmasse (m), **dadurch gekennzeichnet, dass** die Produktionsstrecke mindestens einen offenen Zentrifugalmischer (1; 21; 41), der einen freien Austrag der Masse bietet, sodass es zu keinem Rückstau der Masse kommt, mit einer im Wesentlichen horizontal angeordneten Trommel, deren Ende offen und nicht oder nur geringfügig verjüngt ist, und einer Welle, die zumindest teilweise mit Stiften versehen ist, mit einer Vorrichtung zur Einstellung einer zur Umgebungsatmosphäre unterschiedlichen Wirkatmosphäre im Zentrifugalmischer (1; 21; 41) umfasst, wobei die Wirkatmosphäre einen zur Umgebungsatmosphäre unterschiedlichen Druck und/oder eine unterschiedliche Zusammensetzung aufweist.

14. Verfahren nach Anspruch 13, **dadurch gekennzeichnet, dass** die Produktionsstrecke mindestens eine Vorrichtung zum Conchieren (8) umfasst und/oder dass die Produktionsstrecke mindestens ein Walzwerk (9) und/oder eine Zerkleinerungsvorrichtung umfasst.

15. Verfahren nach einem der Ansprüche 13 bis 14, **dadurch gekennzeichnet, dass** der Zentrifugalmischer (1; 21; 41) derart in der Strecke angeordnet ist, dass der Zentrifugalmischer (1; 21; 41) mindestens zweimal von der Fettmasse (m) oder zumindest Teilen davon durchlaufen wird.

16. Verwendung entsprechend Anspruch 9, mit einer Produktionsstrecke zur Verfeinerung der Fettmasse (m), **dadurch gekennzeichnet, dass** die Produktionsstrecke mindestens einen offenen Zentrifugalmischer (1; 21; 41), der einen freien Austrag der Masse bietet, sodass es zu keinem Rückstau der Masse kommt, mit einer im Wesentlichen horizontal angeordneten Trommel, deren Ende offen und nicht oder nur geringfügig verjüngt ist, und einer Welle, die zumindest teilweise mit Stiften versehen ist, mit einer Vorrichtung zur Einstellung einer zur Umgebungsatmosphäre unterschiedlichen Wirkatmosphäre im Zentrifugalmischer (1; 21; 41) umfasst, wobei die Wirkatmosphäre einen zur Umgebungsatmosphäre unterschiedlichen Druck und/oder eine unterschiedliche Zusammensetzung aufweist.

## Claims

1. Method for refining a fat mass (m), namely a chocolate mass or cocoa mass, wherein the fat mass (m) is exposed to an active atmosphere which is different from the ambient atmosphere in at least one open centrifugal mixer (1; 21; 41) that offers a free discharge of the mass in such a manner that no backup of the mass occurs, having a substantially horizontally arranged drum, the end of which is open and is not tapered or is only slightly tapered, and a shaft that is at least in part provided with pegs, wherein the active atmosphere has a pressure and/or composition that is different from the ambient atmosphere.

2. Method according to Claim 1, **characterized in that** the active atmosphere has a temperature that is different from the ambient atmosphere.

3. Method according to Claim 1 or 2, **characterized in that** a gas is introduced or substituted into the fat mass (m).

4. Method according to Claim 1 or 2, **characterized in that** constituents, in particular in the form of gases or moisture, are removed from the fat mass (m).

5. Method according to any one of the preceding claims, **characterized in that** a pressure difference between the active atmosphere and the ambient atmosphere is generated by introduction of a gas or a gas mixture into the centrifugal mixer (1; 21; 41) and/or by applying a reduced pressure to the centrifugal mixer (1; 21; 41).

6. Method according to any one of Claims 1 to 5, **characterized in that** particles and/or gases present in the fat mass (m) are additionally dispersed in the centrifugal mixer (1; 21; 41).

7. Method according to any one of the preceding claims, **characterized in that** the density of the fat mass (m) is reduced to a predetermined value.

8. Method according to any one of the preceding claims, **characterized in that** liquid, in particular water, is added to a cocoa mass.

9. Use of an open centrifugal mixer (1; 21; 41), which offers a free discharge of the mass in such a manner that no backup of the mass occurs, having a substantially horizontally arranged drum, the end of which is open and is not tapered or is only slightly tapered, and a shaft that is at least in part provided with pegs, for refining a fat mass (m), namely a chocolate mass or cocoa mass, wherein the fat mass (m) is exposed in a method according to any one of Claims 1-8 to an active atmosphere different from the ambient atmosphere in the centrifugal mixer (1; 21; 41), wherein the active atmosphere has a pressure and/or a composition different from the ambient atmosphere.

10. Use of a centrifugal mixer (1; 21; 41) according to Claim 9, wherein the active atmosphere has a temperature different from the ambient atmosphere and/or wherein a gas is introduced and/or substituted into the fat mass (m), and/or wherein constituents in the form of gas and/or moisture are removed from the fat mass (m).

11. Use of a centrifugal mixer (1; 21; 41) according to either of Claims 9 and 10, wherein particles, liquids and/or gases present in the fat mass (m) are finely dispersed in the centrifugal mixer (1; 21; 41).

12. Use of a centrifugal mixer (1; 21; 41) according to any one of Claims 9 to 11, wherein the pressure difference between the active atmosphere and the ambient atmosphere is generated by introducing a gas or a gas mixture and/or by applying a reduced pressure.

13. Method according to Claim 1, having a production section for refining the fat mass (m), **characterized in that** the production section comprises at least one open centrifugal mixer (1; 21; 41) which offers a free discharge of the mass, in such a manner that no backup of the mass occurs, having a substantially horizontally arranged drum, the end of which is open and is not tapered or is only slightly tapered, and a shaft which is at least in part provided with pegs, having a device for establishing an active atmosphere in the centrifugal mixer (1; 21; 41) that is different from the ambient atmosphere, wherein the active atmosphere has a pressure and/or composition that is different from the ambient atmosphere.

14. Method according to Claim 13, **characterized in that** the production section comprises at least one device for conching (8) and/or **in that** the production section comprises at least one roll refiner (9) and/or a comminution device.

15. Method according to any one of Claims 13 to 14, **characterized in that** the centrifugal mixer (1; 21; 41) is arranged in the section in such a manner that the centrifugal mixer (1; 21; 41) is passed through at least twice by the fat mass (m) or at least parts thereof.

16. Use according to Claim 9, having a production section for refining the fat mass (m), **characterized in that** the production section comprises at least one open centrifugal mixer (1; 21; 41) that offers a free discharge of the mass in such a manner that no backup of the mass occurs, having a substantially horizontally arranged drum, the end of which is open and is not tapered or is only slightly tapered, and a shaft that is at least in part provided with pegs, having a device for establishing an active atmosphere in the centrifugal mixer (1; 21; 41) that is different from the ambient atmosphere, wherein the active atmosphere has a pressure and/or composition different from the ambient atmosphere.

## Revendications

1. Procédé pour affiner une masse de matière grasse (m), à savoir une masse de chocolat ou de cacao, dans lequel la masse de matière grasse (m) est, dans au moins un mélangeur centrifuge ouvert (1; 21 ; 41), qui permet une évacuation libre de la masse, de telle sorte qu'il n'en résulte pas de retenue de la masse, comportant un tambour disposé pour l'essentiel horizontalement, dont l'extrémité est ouverte et ne se rétrécit pas ou seulement dans une faible mesure, et un arbre, qui au moins partiellement est pourvu d'aiguilles, soumise à une atmosphère de travail, différente de l'atmosphère ambiante, l'atmosphère de travail présentant une pression différente de celle de l'atmosphère ambiante et/ou une composition différente.

2. Procédé selon la revendication 1, **caractérisé en ce que** l'atmosphère de travail présente une température différente de celle de l'atmosphère ambiante.

3. Procédé selon la revendication 1 ou 2, **caractérisé en ce qu'**un gaz est introduit dans la masse de matière grasse (m), ou y est remplacé.

4. Procédé selon la revendication 1 ou 2, **caractérisé en ce que** des constituants, en particulier sous forme de gaz ou d'humidité, sont prélevés de la masse de matière grasse (m).

5. Procédé selon l'une des revendications précédentes, **caractérisé en ce qu'**une différence de pression est produite entre l'atmosphère de travail et l'atmosphère ambiante, par injection d'un gaz ou d'un mélange de gaz dans le mélangeur centrifuge (1 ; 21 ; 41) et/ou par application d'une dépression au mélangeur centrifuge (1 ; 21 ; 41).

6. Procédé selon l'une des revendications 1 à 5, **caractérisé en ce que** des particules et/ou des gaz présents dans la masse de matière grasse (m) sont en outre dispersés dans le mélangeur centrifuge (1 ; 21 ; 41).

7. Procédé selon l'une des revendications précédentes, **caractérisé en ce que** la masse volumique de la masse de matière grasse (m) est réduite à une valeur prédéfinie.

8. Procédé selon l'une des revendications précédentes, **caractérisé en ce qu'**un liquide, en particulier de l'eau, est ajouté à une masse de cacao.

9. Utilisation d'un mélangeur centrifuge ouvert (1 ; 21 ; 41), qui permet une évacuation libre de la masse, de telle sorte qu'il n'en résulte pas de retenue de la masse, comportant un tambour disposé pour l'essentiel horizontalement, dont l'extrémité est ouverte ou ne se rétrécit pas ou seulement dans une faible mesure, et un arbre, qui au moins partiellement est pourvu d'aiguilles, pour affiner une masse de matière grasse (m), à savoir une masse de chocolat ou de cacao, la masse de matière grasse (m) étant, dans un procédé selon l'une des revendications 1 à 8, soumise dans le mélangeur centrifuge (1 ; 21 ; 41) à une atmosphère de travail différente de la atmosphère ambiante, l'atmosphère de travail présentant une pression différente de celle de l'atmosphère ambiante et/ou une composition différente.

10. Utilisation d'un mélangeur centrifuge (1 ; 21 ; 41) selon la revendication 9, pour laquelle l'atmosphère de travail présente une température différente de celle de l'atmosphère ambiante, et/ou un gaz est introduit dans la masse de matière grasse (m) ou y est remplacé, et/ou des constituants, sous forme de gaz et/ou d'humidité, sont prélevés de la masse de matière grasse (m).

11. Utilisation d'un mélangeur centrifuge (1 ; 21 ; 41) selon l'une des revendications 9 ou 10, pour laquelle les particules, liquides et/ou gaz présents dans la masse de matière grasse (m) sont finement dispersés dans le mélangeur centrifuge (1 ; 21 ; 41).

12. Utilisation d'un mélangeur centrifuge (1 ; 21 ; 41) selon l'une des revendications 9 à 11, pour laquelle la différence de pression entre l'atmosphère de travail et l'atmosphère ambiante est produite par injection d'un gaz ou d'un mélange de gaz et/ou par application d'une dépression.

13. Procédé correspondant à la revendication 1, comportant une ligne de production pour affiner la masse de matière grasse, **caractérisé en ce que** la ligne de production comprend au moins un mélangeur centrifuge ouvert (1 ; 21 ; 41), qui forme une évacuation libre de la masse, de telle sorte qu'il n'en résulte pas de retenue de la masse, comportant un tambour disposé pour l'essentiel horizontalement, dont l'extrémité est ouverte et ne se rétrécit pas ou seulement dans une faible mesure, et un arbre qui au moins partiellement est pourvu d'aiguilles, et comportant un dispositif pour ajuster dans le mélangeur centrifuge (1 ; 21 ; 41) une atmosphère de travail différente de l'atmosphère ambiante, l'atmosphère de travail présentant une pression différente de celle de l'atmosphère ambiante et/ou une composition différente.

14. Procédé selon la revendication 13, **caractérisé en ce que** la ligne de production comprend au moins un dispositif de conchage (8), et/ou que la ligne de production comprend au moins un laminoir (9) et/ou un dispositif de broyage.

15. Procédé selon l'une des revendications 13 à 14, **caractérisé en ce que** le mélangeur centrifuge (1 ; 21 ; 41) est disposé sur la ligne de telle sorte que le mélangeur centrifuge (1 ; 21 ; 41) soit traversé au moins deux fois par la masse de matière grasse (m), ou au moins par des parties de cette dernière.

16. Utilisation correspondant à la revendication 9, avec une ligne de production pour affiner la masse de matière grasse (m), **caractérisée en ce que** la ligne de production comprend au moins un mélangeur centrifuge ouvert (1 ; 21 ; 41), qui permet une évacuation libre de la masse, de telle sorte qu'il n'en résulte pas de retenue de la masse, comportant un tambour pour l'essentiel disposé horizontalement, dont l'extrémité est ouverte et ne se rétrécit pas ou seulement dans une faible mesure, et un arbre qui au moins partiellement est pourvu d'aiguilles, ainsi qu'un dispositif pour ajuster dans le mélangeur centrifuge (1 ; 21 ; 41) une atmosphère de travail différente de l'atmosphère ambiante, l'atmosphère de travail présentant une pression différente de celle de l'atmosphère ambiante et/ou une composition différente.
